# EUROPÄISCHE PATENTSCHRIFT

(11) **EP 2 823 165 B1**
(45) Veröffentlichungstag und Bekanntmachung des Hinweises auf die Patenterteilung: **16.05.2018**
(21) Anmeldenummer: 13707652.7
(22) Anmeldetag: 06.03.2013
(51) Int. Cl.: F01N 3/28

(54) **WABENKÖRPER ZUR ABGASNACHBEHANDLUNG**
HONEYCOMB BODY FOR EXHAUST GAS POST-TREATMENT
CORPS EN NID D'ABEILLE DESTINÉ AU TRAITEMENT DES GAZ D'ÉCHAPPEMENT

(30) Priorität: 09.03.2012 DE 102012004918
(43) Veröffentlichungstag der Anmeldung: 14.01.2015
(73) Patentinhaber: Continental Automotive GmbH, 30165 Hannover (DE)
(72) Erfinder: HIRTH, Peter, 51503 Rösrath (DE); STOCK, Holger, 53721 Siegburg (DE); BRÜCK, Rolf, 51429 Bergisch Gladbach (DE)
(86) Internationale Anmeldenummer: PCT/EP2013/054536
(87) Internationale Veröffentlichungsnummer: WO 2013/131977

(56) Entgegenhaltungen:
- EP-A1- 0 613 997
- EP-A1- 0 988 892
- DE-A1-102005 045 492
- DE-A1-102008 022 518

## Beschreibung

Die vorliegende Erfindung betrifft einen Wabenkörper zur Abgasnachbehandlung, wie er insbesondere als Katalysator-Trägerkörper in Abgassystemen mobiler Verbrennungskraftmaschinen eingesetzt wird. Ein solcher Wabenkörper stellt insbesondere eine große Oberfläche zur Verfügung, auf der katalytisch aktives Material positioniert und mit dem den Wabenkörper durchströmenden Abgas in Kontakt gebracht wird. Die Erfindung findet insbesondere Anwendung bei der Abgasreinigung in Kraftfahrzeugen.

Es sind bereits eine Vielzahl unterschiedlicher Ausgestaltungen von Wabenkörpern zur Abgasnachbehandlung vorgeschlagen worden. Grundsätzlich wird zwischen Wabenkörpern aus Keramik und Metall unterschieden. Aufgrund der einfacheren Herstellung und der geringeren Wanddicken und damit der Möglichkeit der Bereitstellung einer größeren Oberfläche pro Volumeneinheit, haben sich insbesondere metallische Wabenkörper für den eingangs genannten Zweck angeboten. Ein solcher Wabenkörper kann mit glatten und/oder strukturierten metallischen Lagen bzw. Blechfolien aufgebaut sein. Diese metallischen Lagen können geschichtet, gewickelt und/oder gewunden und schließlich in einem Gehäuse des Wabenkörpers platziert werden, so dass eine Vielzahl von für das Abgas durchströmbare Kanäle gebildet sind. Dabei können sich die Kanäle beispielsweise geradlinig, gewunden und/oder schräg zwischen den Stirnseiten eines solchen Wabenkörpers erstrecken.

Mit dem Ziel eines möglichst innigen Kontakts des Abgases mit den Wandungen des Wabenkörpers, bzw. der dort platzierten katalytischen Beschichtung, wurden bereits Maßnahmen vorgeschlagen, die eine laminare Strömung des Abgases durch den Wabenkörper hindurch reduzieren. So können bspw. Öffnungen in den Kanalwänden vorgesehen sein, so dass miteinander kommunizierende Kanäle gebildet sind. Ebenso ist bekannt, in den Kanälen Umlenkstrukturen, Leitflügel etc. vorzusehen, um eine gezielte Strömungsumlenkung in den Kanälen, Druckunterschiede zwischen den Kanälen, oder ähnliches zu erreichen. Dabei ist jedoch zu berücksichtigen, dass ggf. mit einer verstärkten Umlenkung der Abgasströmung innerhalb des Wabenkörpers auch ein Druckverlust über den Wabenkörper erhöht wird. Dies kann zu Leistungseinbußen der Verbrennungskraftmaschine führen, weil der dadurch gebildete Staudruck den Ausschub von Abgas aus der Verbrennungskraftmaschine behindern kann.

Gerade im Automobilbau werden weitere Anforderungen an einen solchen Wabenkörper bzw. dessen Herstellung gestellt. So steht insbesondere im Fokus, die Herstellung möglichst kostengünstig und einfach zu gestalten.

Darüber hinaus ist auch zu berücksichtigen, dass ein solcher Wabenkörper in einem mobilen Abgassystem erheblichen thermischen und/oder dynamischen Wechselbeanspruchungen unterliegt, so dass hier auch besonders hohe Anforderungen an die Dauerhaltbarkeit eines solches Wabenkörpers unter diesen Bedingungen gestellt werden.

Die EP 0 613 997 A1 beschreibt einen Katalysatorträgerkörper, der aus metallischen Folien hergestellt ist. Die metallischen Folien weisen, in Längsrichtung des Wabenkörpers gesehen, abwechselnd strukturierte und glatte Bereiche auf. Für die Herstellung des Wabenkörpers werden jeweils zwei Folien miteinander verbunden. Die zweite Folie weist eine in Längsrichtung entgegengesetzt ausgeführte Strukturierung auf. Das heißt, werden die Folien aufeinander gelegt, sind glatte Bereiche der einen Folie an strukturierten Bereichen der anderen Folie angeordnet und umgekehrt. Zur Verbindung der aufeinander angeordneten Folien werden glatte Lotstreifen zwischen den Folien angeordnet.

Hiervon ausgehend ist es Aufgabe der vorliegenden Erfindung, einen Wabenkörper zur Abgasnachbehandlung (insbesondere bei Kraftfahrzeugen) anzugeben, der die eingangs geschilderten technischen Probleme zumindest lindert oder sogar löst.

Diese Aufgaben werden gelöst mit einem Wabenkörper zur Abgasnachbehandlung gemäß den Merkmalen des Patentanspruchs 1. Weitere vorteilhafte Ausgestaltungen des Wabenkörpers sind in den abhängig formulierten Patentansprüchen angegeben. Es ist darauf hinzuweisen, dass die Beschreibung weitere Erläuterungen und Merkmale aufweist, die in beliebiger, technologisch sinnvoller, Weise mit den Merkmalen der Patentansprüche kombinierbar sind und weitere Ausführungsvarianten der Erfindung aufgezeigt.

Der Wabenkörper zur Abgasnachbehandlung hat eine erste Stirnseite, eine zweite Stirnseite, eine Zentrumsachse, welche beide Stirnseiten durchdringt, und eine Länge. Weiter weist der Wabenkörper mindestens eine zumindest teilweise strukturierte metallische Lage auf, die um die Zentrumsachse herum angeordnet ist. Die Struktur der mindestens einen metallischen Lage hat weiter Erhebungen und Vertiefungen, die sich zumindest über einen Teil der Länge des Wabenkörpers erstrecken und schräg zur Zentrumsachse verlaufen. Zusätzlich ist mindestens ein metallischer Verbindungsstreifen zwischen benachbarten Bereichen der mindestens einen zumindest teilweise strukturierten metallischen Lage vorgesehen, der kürzer als die Länge des Wabenkörpers ausgeführt ist und eine Lötverbindung oder Schweißverbindung hin zu diesen benachbarten Bereichen ausbildet.

Der Wabenkörper kann grundsätzlich verschiedene Gestalten aufweisen, so insbesondere einen runden, ovalen, vieleckigen oder ähnlichen Querschnitt. Vielfach wird ein solcher Wabenkörper mit einem rohrähnlichen Gehäuse ausgebildet. Das Abgas tritt dabei im Betrieb regelmäßig über eine der beiden Stirnseiten ein und über die andere Stirnseite wieder aus. Die bevorzugt im Wesentlichen parallel zueinander angeordneten Stirnseiten definieren regelmäßig die Länge des Wabenkörpers in Richtung der Zentrumsachse, die beide Stirnseiten durchdringt und insbesondere zu zumindest einer, bevorzugt beiden Stirnseiten senkrecht und mittig angeordnet ist.

Der Wabenkörper weist zudem mindestens eine zumindest teilweise strukturierte metallische Lage auf. Dabei ist möglich, dass eine (einzelne) metallische Lage glatte und strukturierte Abschnitte bzw. Abschnitte mit unterschiedlicher Strukturierung aufweist. Diese mindestens eine metallische Lage kann z. B. nach Art einer Spirale um eine Zentrumsachse herum angeordnet sein. Zudem ist möglich, dass mehrere metallische Lagen eingesetzt werden, wobei z. B. ein Teil der Lagen glatt und/oder anders strukturiert sind, als mindestens eine weitere metallische Lage. Insbesondere werden zwei metallische Lagen oder ein Vielfaches davon eingesetzt, wobei ein Lagenpaar die gleiche Struktur (Art, Größe, etc.) hat, aber diese mit einer unterschiedlichen Orientierung ausgebildet sind, so dass diese sich kreuzen.

Die Struktur der metallischen Lage ist dabei bevorzugt über die gesamte Länge, also zwischen der ersten Stirnseite und der zweiten Stirnseite, ausgebildet. Die Struktur ist durch Erhebungen und Vertiefungen gebildet, die bspw. in die metallische Lage eingeprägt sind. Dabei wechseln sich regelmäßig in Verlaufsrichtung der metallischen Lage Erhebungen und Vertiefungen ab. Die Erhebungen und Vertiefungen können im Querschnitt eine Art Sinus-Wellung, Zickzack-Form oder dergleichen ausbilden. Die Anordnung der Struktur bzw. der Erhebungen und Vertiefungen im Wabenkörper erfolgt nun so, dass diese schräg zur Zentrumsachse verlaufen. Damit werden insbesondere Kanalabschnitte gebildet, die nicht parallel zur Zentrumsachse verlaufen, sondern schräg dazu. Trifft also eine Abgasströmung auf eine Stirnseite senkrecht auf, wird das Abgas zunächst aufgeteilt, weil es in die mit den Erhebungen oder Vertiefungen gebildeten Kanalöffnungen eindringt und dann im Inneren des Wabenkörpers umgelenkt wird. Dabei ist die Ausprägung der Struktur derart, dass die Erhebungen und Vertiefungen in benachbarten Bereichen (betrachtet in radialer Richtung bezogen auf die Zentrumsachse) verschieden geneigt sind bzw. eine voneinander abweichende Orientierung aufweisen. Erfolgt bspw. in einem Bereich eine Ablenkung nach rechts, so ist bevorzugt, dass in dem weiter innen liegenden Bereich eine Ablenkung nach links erfolgt bzw. umgekehrt. Ganz besonders bevorzugt ist, dass diese Ausrichtung bzw. Orientierung in radialer Richtung betrachtet stets abwechselt. Dies führt dazu, dass die Erhebungen und Vertiefungen wenigstens teilweise, und bevorzugt an keiner Stelle des Wabenkörpers linienförmig aufeinanderliegen, sondern einander kreuzen und damit im Wesentlichen nur punktförmige Auflagepunkte miteinander bilden. Damit ergibt sich ein Aufbau, bei dem die Teilabgasströme permanent umgelenkt werden und in benachbarte Erhebungen bzw. Vertiefungen einströmen können, insbesondere nach Art eines Zickzacks.

Zusätzlich zur schrägen Struktur kann an und/oder in den Erhebungen und/oder Vertiefungen eine Mehrzahl von Mikroeinbauten (Leitflächen, Noppen, etc.) und/oder Löcher vorgesehen sein. Bevorzugt ist, dass an einer Erhebung und/oder Vertiefung jeweils mehrere Mikroeinbauten und/oder Löcher vorgesehen sind (betrachtet in Verlaufsrichtung der Erhebung und/oder Vertiefung).

Gerade bei einem solchen Aufbau ist es besonders schwierig, eine dauerhafte Verbindung zwischen diesen Erhebungen und Vertiefungen benachbarter Bereiche auszubilden, weil infolge der Toleranzen bei der Fertigung solcher metallischen Lagen und/oder einer Verformung während der Montage die exakten Positionen der Auflagepunkte nicht immer vorbestimmt werden können. Zudem ist es schwierig, nachträglich an diese Stelle Verbindungsmaterial zu platzieren und/oder über den gesamten Wabenkörper eine gleichmäßige Anbindung der metallischen Lage(n) zu erzielen.

Der metallische Wabenkörper weist dafür weiter mindestens einen metallischen Verbindungsstreifen auf, der zwischen diesen benachbarten Bereichen und zwischen den Auflagepunkten vorgesehen ist. Bevorzugt ist, dass ein, zwei oder drei solcher metallischen Verbindungsstreifen vorgesehen sind. Bevorzugt ist, dass ein solcher metallischer Verbindungsstreifen sich über den gesamten Querschnitt des Wabenkörpers erstreckt, also insbesondere zwischen allen Auflagepunkten der schräg ausgeführten Struktur im Querschnitt. Der metallische Verbindungsstreifen ist bevorzugt glatt ausgeführt, weist also im Wesentlichen keine (signifikante und/oder gezielt eingeprägte) Struktur auf. Ggf. können jedoch Mikrostrukturen vorgesehen sein, die bspw. durch die Montage bzw. während der Fertigung bzw. das Anpressen der benachbarten Bereiche mit Struktur entstehen. Dieser Verbindungsstreifen bietet demnach eine flächige Anlagemöglichkeit für die dann linienförmig anliegenden Erhebungen und Vertiefungen in diesen Längenabschnitt, wobei dort dann gezielt eine Lötverbindung oder Schweißverbindung ausgeführt sein kann. So kann der Verbindungsstreifen bspw. vorher mit Lotmaterial (großflächig) versehen sein, wobei dann nur an den jeweiligen Kontaktbereichen Verbindungen ausgeführt werden. Noch gezielter lässt sich eine dauerhafte Verbindung herstellen, wenn über diesen metallischen Verbindungsstreifen konkrete Schweißverbindungen hin zu den Erhebungen und/oder Vertiefungen der Struktur (beidseits) ausgebildet sind. Dabei ist auch möglich, dass nicht alle Erhebungen und/oder Vertiefungen mit einer Verbindung ausgeführt sind, sondern dass zum Beispiel benachbart in dem Längenabschnitt auch "freie" bzw. "flexible" Anlagepunkte vorgesehen sind. Somit kann ein thermisches Ausdehnungsverhalten durch eine begrenzte Bewegung (Entfernung) von Verbindungsstreifen und metallischer Lage(n) ausgeglichen werden. Die Anzahl der benachbarten "freien" bzw. "flexiblen" Anlagepunkte zwischen zwei Lötverbindungen oder Schweißverbindungen kann konstant sein oder variieren. Bevorzugt sind zumindest zwei "freie" bzw. "flexible" Anlagepunkte zwischen zwei Lötverbindungen oder Schweißverbindungen.

Im Ergebnis bedeutet das insbesondere, dass über die Länge des Wabenkörpers betrachtet, mindestens ein Längenabschnitt ausgebildet ist, in dem benachbarte Bereiche der die Struktur bildenden Lagen über einen Verbindungsstreifen dauerhaft fixiert sind, während in mindestens einem anderen Längenabschnitt (nicht stoffschlüssige fixierte) Auflagepunkte mittels direktem Kontakt der benachbarten Strukturen ausgebildet sind.

Weiterhin ist bevorzugt, dass der mindestens eine metallische Verbindungsstreifen eine Breite von 5 bis 20 mm [Millimeter] hat. Ganz besonders bevorzugt ist hierbei, dass der Verbindungsstreifen damit jeweils maximal ein Fünftel, ein Zehntel oder sogar nur ein Fünfzehntel der tatsächlichen Länge des Wabenkörpers ausmacht. Mit anderen Worten bedeutet das auch, dass die Breite des metallischen Verbindungsstreifens parallel zur Länge bzw. der Zentrumsachse des Wabenkörpers zu bestimmen ist. Diese relativ geringe Breite des metallischen Verbindungsstreifens erlaubt einen besonders effizienten Einsatz der Löt- bzw. Schweißverfahren, wobei gleichzeitig entsprechend dem dynamischen und/oder thermischen Verhalten des Wabenkörpers gezielt Verbindungsbereiche vorgesehen sein können.

Einer Weiterbildung des Wabenkörpers zufolge ist der mindestens eine metallische Verbindungsstreifen um die Zentrumsachse herum und mindestens nahe einer Stirnseite des Wabenkörpers angeordnet. Bevorzugt ist hierbei, dass der metallische Verbindungsstreifen dem Verlauf der zumindest einen metallischen Lage folgt, also insbesondere auch spiralförmig um die Zentrumsachse verläuft. Ganz besonders bevorzugt ist, dass angrenzend beider Stirnseiten ein metallischer Verbindungsstreifen vorgesehen ist, wobei also insbesondere die Anzahl der Verbindungsstreifen auf zwei begrenzt ist.

Als vorteilhaft wird auch angesehen, dass der mindestens eine metallische Verbindungsstreifen in einem axialen Abschnitt des Wabenkörpers einen Kontakt mindestens einer zumindest teilweise strukturierten metallischen Lage mit sich selbst oder einer weiteren zumindest teilweise strukturierten metallische Lage unterbindet. Ist der Wabenkörper bspw. mit einer einzelnen metallischen strukturierten Lage ausgebildet, so unterbindet der Verbindungsstreifen den direkten Kontakt (an den Auflagepunkten) benachbarter Bereiche dieser Lage miteinander. Werden mehrere zumindest teilweise strukturierte metallische Lagen nebeneinander angeordnet (geschichtet) und dann gewickelt, so wird der Kontakt zwischen diesen mehreren zumindest teilweise strukturierten metallischen Lagen in dem axialen Abschnitt unterbunden. In anderen axialen Abschnitten des Wabenkörpers (betrachtet in Richtung der Zentrumsachse) ist dagegen ein solcher direkter Kontakt gegeben, weil keine metallischen Verbindungsstreifen dort platziert sind.

Weiterhin wird als vorteilhaft angesehen, dass der Wabenkörper so gestaltet ist, dass ein Winkel zwischen den Erhebungen oder Vertiefungen sowie der Zentrumsachse maximal 20° [Grad] beträgt. Insbesondere kann vorgesehen sein, dass der Winkel in einem Bereich von 1° bis 10° und ganz besonders bevorzugt im Bereich von 2° bis 6° liegt.

Der Winkel sollte insbesondere so gewählt sein, dass auch bei dieser geringen Neigung über die Länge des Wabenkörpers ggf. nur eine geringe Anzahl von Auflagepunkten (bevorzugt 2, 3, 4, 5, 6, 7, 8, 9 oder 10) geschaffen ist, wobei noch immer sichergestellt ist, dass insbesondere die Stabilität der Wabenstruktur nicht leidet und/oder die Anpresskräfte im Bereich des metallischen Verbindungsstreifens nicht zu groß sind (was insbesondere auch zu einer Verformung des Verbindungsstreifens führen kann). So wird insbesondere vorgeschlagen, den Winkel dann klein zu wählen, wenn eine hohe Zelldichte bei dem Wabenkörper und/oder eine Struktur mit dicht nebeneinander liegenden Erhebungen und Vertiefungen vorgesehen ist. Demnach ist bei einem Wabenkörper mit einer Zelldichte von mindestens 600 cpsi (Zellen pro Quadratinch) beispielsweise ein Winkel von maximal 10° bevorzugt. Insbesondere wird hier vorgeschlagen, dass der Winkel so eingestellt ist, dass sich über die Länge des Wabenkörpers für eine Erhebung/Vertiefung maximal 4 oder sogar genau nur 2 Auflagepunkte ergeben.

Weiterhin wurde herausgefunden, dass bei einem Winkel oberhalb von 20° ein unerwünscht hoher Strömungswiderstand gebildet wird, der zu einem Staudruck führt, welcher die Leistungscharakteristik des Abgassystems bzw. der Verbrennungskraftmaschine negativ beeinflussen kann. Diese Eigenschaft des Wabenkörpers nimmt weiter ab, wenn der Winkel reduziert wird. Der Winkel lässt sich insbesondere bestimmen, wenn seitlich bzw. in radialer Richtung hin zur Zentrumsachse der Verlauf der Erhebungen und/oder Vertiefungen betrachtet wird.

Diese Ausgestaltung eines Wabenkörpers mit entsprechend gering geneigten Strukturen kann auch unabhängig von der hier vorgeschlagenen Anordnung mit dem metallischen Verbindungsstreifen bereits eine signifikante Verbesserung der bekannten Wabenkörper sein. Dieser ließe sich so beschreiben: Wabenkörper zur Abgasnachbehandlung mit einer ersten Stirnseite, mit einer zweiten Stirnseite, mit einer Zentrumsachse, welche beide Stirnseiten durchdringt, und mit einer Länge, aufweisend mindestens eine zumindest teilweise strukturierte metallische Lage, die um die Zentrumsachse herum angeordnet ist, wobei die Struktur der mindestens einen metallischen Lage Erhebungen und Vertiefungen hat, die sich zumindest über einen Teil der Länge des Wabenkörpers erstrecken und schräg zur Zentrumsachse verlaufen, wobei ein Winkel zwischen den Erhebungen oder Vertiefungen sowie der Zentrumsachse maximal 20° beträgt. Wenn kein metallischer Verbindungsstreifen vorgesehen ist, können demnach an den (wenigen) Auflagepunkten Lötverbindungen, Schweißverbindungen und/oder Diffusionsanbindungen vorgesehen sein. Besonders bevorzugt ist eine Gestalt des Wabenkörpers, bei der pro Erhebung/Vertiefung genau nur 2 oder 3 Auflagepunkte existieren. Im Hinblick auf die Gestalt des Wabenkörpers und seinen Funktionen wird insbesondere auf die obigen Erläuterungen verwiesen. Nicht erfindungsgemäß wird ein Verfahren zur Herstellung eines Wabenkörpers zur Abgasnachbehandlung angegeben. Das Verfahren umfasst dabei zumindest folgende Schritte:
a) Bereitstellen einer bandförmigen, strukturierten metallischen Lage mit einer Länge, aufweisend eine Struktur mit Erhebungen und Vertiefungen, die schräg zu einem Rand der metallischen Lage ausgebildet sind,
b) Ablegen eines metallischen Verbindungsstreifens auf einen Teilabschnitt einer ersten Oberfläche der strukturierten metallischen Lage, wobei der metallische Verbindungsstreifen kürzer ist als die Länge der strukturierten metallischen Lage,
c) Ausbilden einer Schweißverbindung zwischen dem metallischen Verbindungsstreifen und der strukturierten metallischen Lage,
d) Aufwickeln der verschweißten Anordnung aus metallischem Verbindungsstreifen und strukturierter metallischen Lage,
e) Ablegen eines Teilabschnitts einer zweiten Oberfläche der strukturierten metallischen Lage auf den metallischen Verbindungsstreifen,
f) Ausbilden einer Schweißverbindung zwischen dem metallischen Verbindungsstreifen und der strukturierten metallischen Lage,
g) Wiederholen der Schritte b) bis f) bis eine Wabenstruktur mit einer Vielzahl von Kanalöffnungen gebildet ist,
h) Einfügen der Wabenstruktur in ein Gehäuse,
i) Verbinden der Wabenstruktur mit dem Gehäuse.

Das hier angeführte Verfahren dient insbesondere zur Herstellung des oben beschriebenen Wabenkörpers, wobei eine Schweißverbindung zwischen dem Verbindungsstreifen und der mindestens einen zumindest teilweise strukturierten metallischen Lage ausgebildet wird. Grundsätzlich sei hier auch angemerkt, dass die Erläuterungen zum Wabenkörper auch für das Verfahren eingesetzt werden können und umgekehrt.

Für Schritt a) ist bevorzugt, dass eine bereits mit einer Struktur versehene metallische Lage bereitgestellt wird. Üblicherweise werden glatte, nach Art eines Bands, spiralförmig auf einer Wicklung bereitgestellte Blechfolien zunächst einem Umformschritt unterzogen, bspw. einem Wellwalzprozess, um die Struktur einzubringen. Hierbei ist nun eine solche Struktur gewählt, die nicht senkrecht vom Rand der bandförmigen metallischen Lage ausgeht, sondern schräg zum Rand orientiert ist, also insbesondere mit einem Winkel von bevorzugt maximal 20° zur Senkrechten auf dem Rand. Ganz besonders bevorzugt ist hierbei, dass sich die Erhebungen und Vertiefungen parallel zueinander und über die gesamte Länge des damit gebildeten Wabenkörpers erstrecken, so dass insbesondere bei der bandförmigen metallischen Lage keine unstrukturierten Bereiche vorliegen.

In (nur) einem Teilabschnitt einer ersten Oberfläche der strukturierten metallischen Lage wird dann gemäß Schritt b) ein metallischer Verbindungsstreifen abgelegt. Da der metallische Verbindungsstreifen bevorzugt glatt ist, liegt er demnach bspw. nur auf den Erhebungen der Oberseite (erste Oberfläche) auf.

Danach erfolgt gemäß Schritt c) das Ausbilden von Schweißverbindungen zwischen den metallischen Verbindungsstreifen und der strukturierten metallischen Lage. Das Ausbilden der Schweißverbindung erfolgt dabei bevorzugt nur von einer Seite dieser Anordnung, so bspw. indem die Schweißverbindung von außen über den metallischen Verbindungsstreifen hin zur dahinter angeordneten metallischen Lage ausgebildet wird.

Diese bereits miteinander verschweißte Anordnung aus metallischen Verbindungsstreifen und strukturierter metallischer Lage wird dann gemeinsam miteinander (teilweise) aufgewickelt (Schritt d), so dass nach und nach eine Anordnung der strukturierten metallischen Lage um eine Zentrumsachse eines Wabenkörpers herum erfolgt.

Insbesondere während des Aufwickelns erfolgt (an einer anderen Stelle des aufgebauten Wabenkörpers) die Ablage eines (anderen) Teilabschnitts einer zweiten Oberfläche der strukturierten metallischen Lage auf den metallischen Verbindungsstreifen (Schritt e)). Dies heißt mit anderen Worten insbesondere, dass nun bspw. auch eine Unterseite (zweite Oberfläche) der strukturierten metallischen Lage auf (dem bereits einseitig verbundenen metallischen Verbindungsstreifen) infolge des Wickelprozesses abgelegt wird.

Gemäß Schritt f) wird nun eine Schweißverbindung (auch) zwischen dem metallischen Verbindungsstreifen und der strukturierten metallischen Lage, insbesondere hin zur zweiten Oberfläche, ausgebildet. Damit werden also Schweißverbindungen beidseits des Verbindungsstreifens hin zu den benachbarten Oberflächen (Oberseite/Unterseite) der strukturierten metallischen Lage ausgebildet. Damit fixiert der metallische Verbindungsstreifen mit seinen Schweißverbindungen zu den benachbarten Bereichen der strukturierten metallischen Lage die Anordnung des Wabenkörpers.

Bevorzugt ist hierbei, dass eine Art intermittierender Aufwickelprozess durchgeführt wird, wobei während des Aufwickelns gemäß Schritt d) gleichzeitig die Schritte b) und e) (zwangsläufig bzw. automatisch) durchgeführt werden, und in kurzen Pausen des Aufwickelprozesses an verschiedenen Orten (gleichzeitig) die Schweißverbindungen gemäß Schritt c) und f) ausgeführt werden. Die Schritte b) bis f) werden folglich vielfach wiederholt, bis schließlich eine Wabenstruktur mit einer Vielzahl von Kanalöffnungen gebildet ist. Ein Wabenkörper, insbesondere für die Anwendung im Automobilbereich, hat bevorzugt einen Durchmesser von 90 mm bis 120 mm, wobei die Strukturhöhe der strukturierten metallischen Lage bspw. im Bereich von 1,5 mm bis 3 mm liegt. Folglich können eine Vielzahl solcher Wicklungen gebildet werden, bis der Wabenkörper mit den gewünschten Abmessungen erzeugt ist.

Dann kann ggf. die strukturierte metallische Lage und/oder der Verbindungsstreifen abgetrennt werden, wobei sich noch das Aufwickeln des Restabschnitts anschließen kann.

Die so vorbereitete Wabenstruktur kann dann gemäß Schritt h) in ein Gehäuse eingefügt werden. Bevorzugt ist dabei, dass die Wabenstruktur vollständig von einem Gehäuse, insbesondere einem rohrförmigen Gehäuse, umschlossen ist.

In einem nachgelagerten Prozess kann dann noch eine Verbindung zwischen Wabenstruktur und Gehäuse ausgeführt werden, bspw. ebenfalls nach Art einer Schweißverbindung oder nach Art einer Lötverbindung.

Der so vorbereitete Wabenkörper kann anschließend noch weiteren Prozessen unterzogen werden, wie bspw. thermischen Behandlungen, Beschichtungsprozessen, etc.

Bevorzugt ist hierbei ein Verfahren, wobei in den Schritten c) und f) das Verfahren Rollnahtschweißen oder Laserschweißen durchgeführt wird. Für das Rollnahtschweißen kann es erforderlich sein, dass die Anordnung aus metallischen Verbindungsstreifen und strukturierter metallischer Lage abgestützt wird. Beim Rollnachtschweißen wird lokal elektrischer Strom durch die Metallfolien hindurchgeführt, wobei durch den Anpressdruck und die damit einhergehende Hitzebildung die Schweißnaht gebildet wird. Beim Laserschweißen wird lokal ein Laserstrahl auf die metallischen Blechfolien gerichtet, wobei hier ebenfalls infolge der Hitzeentwicklung eine Schweißnaht gebildet wird.

Bevorzugt ist zudem eine Verfahrensvariante, bei der in den Schritten c) und f) jeweils nur Verbindungen mit einer Vertiefung oder einer Erhebung der strukturierter metallischen Lage ausgebildet werden. Wird der metallische Verbindungsstreifen in Schritt b) bspw. auf eine Oberseite der strukturierten metallischen Lage aufgebracht, so ist diese nur mit den Erhebungen in Kontakt, so dass dort auch tatsächlich nur Schweißverbindungen zwischen den Erhebungen und der strukturierten metallischen Lage ausgebildet werden. Beim Aufwickeln wird dann ein anderer Teilabschnitt der metallischen Lage von der gegenüberliegenden Seite aufgelegt, so dass der Verbindungsstreifen nun mit der Unterseite bzw. den Vertiefungen in Kontakt gebracht wird. An dieser Stelle bzw. während Schritt f) wird dann z. B. nur eine Schweißverbindung zwischen Vertiefungen und dem dahinter liegenden metallischen Verbindungsstreifen ausgeführt.

Weiter wird der Einsatz der Erfindung insbesondere derart vorgeschlagen, dass ein Kraftfahrzeug eine Verbrennungskraftmaschine mit einer Abgasanlage aufweist, wobei die Abgasanlage wenigstens einen Katalysatorträger oder einen Partikelabscheider aufweist, der mit einem hier beschriebenen Wabenkörper ausgeführt ist. Dabei kann der Katalysatorträger und/oder der Partikelabscheider eine katalytisch aktive Beschichtung aufweisen, die ggf. auch in axialen Teilabschnitten eines Wabenkörpers verschieden ausgeführt sein kann.

Die Erfindung führt insbesondere dazu, dass die bei gerader Ausrichtung stets vielfach und langgestreckten Zwickeln zwischen den Strukturen reduziert werden, womit bei gleicher Zelldichte des Wabenkörpers eine größere Oberfläche bereitgestellt werden kann und unerwünschte Ansammlungen von Washcoat (oder einer anderen Beschichtung) in diesen Zwickeln reduziert werden kann.

Die Erfindung sowie das technische Umfeld werden nachfolgend im Zusammenhang mit den Figuren näher erläutert. Es ist darauf hinzuweisen, dass die Figuren bevorzugte Ausführungsvarianten der Erfindung aufzeigen können, die Erfindung jedoch nicht darauf beschränkt ist. Insbesondere sind die veranschaulichten Größenverhältnisse und Winkelmaße rein schematisch. Es zeigen:
- Fig. 1:: eine perspektivische Ansicht eines Wabenkörpers zur Abgasnachbehandlung,
- Fig. 2:: eine abgewickelte, geschichtete Anordnung einer strukturierten metallischen Lage und eines metallischen Verbindungsstreifens,
- Fig. 3:: einen Schichtaufbau der strukturierten metallischen Lage im Querschnitt, wobei Auflagepunkte gebildet sind,
- Fig. 4:: einen Schichtaufbau von strukturierten metallischen Lagen und Verbindungsstreifen, wobei Verbindungen ausgeführt sind,
- Fig. 5:: schematisch einen Herstellungsprozess für einen solchen Wabenkörper, und
- Fig. 6:: ein Abgassystem eines Kraftfahrzeugs.

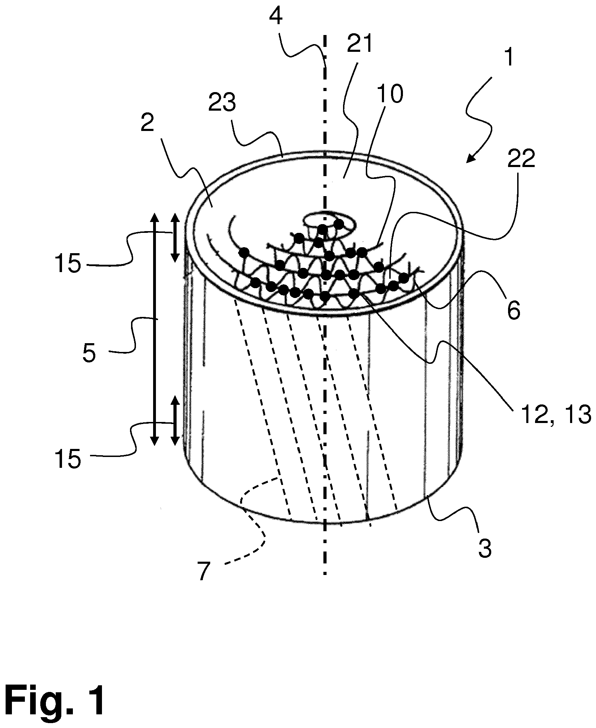

In Fig. 1 ist schematisch und in teilweise perspektivischer Ansicht ein Wabenkörper 1 zur Abgasnachbehandlung dargestellt. Der Wabenkörper 1 weist eine erste (hier oben dargestellte) Stirnseite 2 und eine (unten angedeutete) zweite Stirnseite 3 auf. Die erste Stirnseite 2 und die zweite Stirnseite 3 sind hier im Wesentlichen parallel zueinander angeordnet und weisen einen im Wesentlichen kreisförmigen Querschnitt auf. Der Wabenkörper 1 hat zudem eine Zentrumsachse 4, welche mittig durch die erste Stirnseite 2 und die zweite Stirnseite 3 verläuft und diese senkrecht durchdringt. Der (zylindrische) Wabenkörper 1 weist zudem eine Länge 5 auf, die praktisch dem Abstand der ersten Stirnseite 2 zur zweiten Stirnseite 3 entspricht.

Der Wabenkörper 1 weist zwei Hauptbestandteile auf, nämlich einerseits das hier zylindrische, rohrförmige Gehäuse 23 sowie die darin positionierte Wabenstruktur 21. Die Wabenstruktur 21 und das Gehäuse 23 sind stoffschlüssig miteinander verbunden. "Stoffschlüssige" Verbindungen werden alle Verbindungen genannt, bei denen die Verbindungspartner durch atomare oder molekulare Kräfte zusammengehalten werden. Sie sind regelmäßig gleichzeitig nicht lösbare Verbindungen, die sich nur durch Zerstörung der Verbindungsmittel trennen lassen (insbesondere Lötverbindungen, Schweißverbindungen, Diffusionsanbindungen).

Die Wabenstruktur 21 ist hier mit einer strukturierten metallischen Lage 6 gebildet, die (spiralförmig) um die Zentrumsachse 4 herum angeordnet ist. Die metallische Lage 6 hat eine Struktur 7, die mit in Verlaufsrichtung der metallischen Lage 6 abwechselnden Erhebungen und Vertiefungen gebildet ist. Die Struktur 7 ist hierbei mit ihrer Orientierung gestrichelt angedeutet, weil diese von dem dargestellten Gehäuse 23 verdeckt ist. Diese gestrichelten Linien deuten jedoch an, dass der Verlauf dieser Struktur 7 (bzw. der Erhebungen und/oder Vertiefungen) schräg zur Zentrumsachse 4 ausgebildet ist. Die Anordnung bzw. Ausgestaltung der metallischen Lage 6 führt dazu, dass der gesamte Querschnitt bzw. die Stirnseiten des Wabenkörpers unterteilt wird, nämlich in eine Vielzahl von Kanalöffnungen 22, durch die das Abgas eintreten bzw. austreten kann. Hierbei kann (nur) auf eine Unterteilung in Kanalöffnungen 22 ausgegangen werden, weil im inneren Bereich der Wabenstruktur 21 keine (vollkommen) abgetrennte Strömungsführung in separaten Kanälen erfolgt. Vielmehr wird das Abgas nach Eintritt durch die Kanalöffnungen 22 auf dem Weg durch die Wabenstruktur hindurch immer wieder auf quer- bzw. schrägstehende Erhebungen und Vertiefungen treffen und somit abgelenkt werden. Somit kommt eine Teilabgasströmung mit mehreren oder sogar einer Vielzahl von verschiedenen Erhebungen und/oder Vertiefungen bei der Reise durch die Wabenstruktur 21 in Kontakt. Dies fördert den innigen Kontakt des Abgases mit der metallischen Lage 6 bzw. dem dort vorgesehenen katalytisch aktiven Material, das später dort platziert wird.

Weiterhin ist in Fig. 1 veranschaulicht, dass angrenzend zur ersten Stirnseite 2 und zur zweiten Stirnseite 3 ein axialer Abschnitt 15 ausgebildet ist, in dem jeweils ein Verbindungsstreifen 10 vorgesehen ist. Der Verbindungsstreifen 10 ist, wie hier angedeutet, in der Wabenstruktur 21 gemeinsam mit der metallischen Lage 6 (spiralförmig) um die Zentrumsachse 4 herum positioniert. Dabei bildet der Verbindungsstreifen 10 in diesem axialen Abschnitt 15 (vollständig) zu den beidseits benachbarten Strukturen der metallischen Lage 6 Lötverbindungen 12 oder Schweißverbindungen 13 aus.

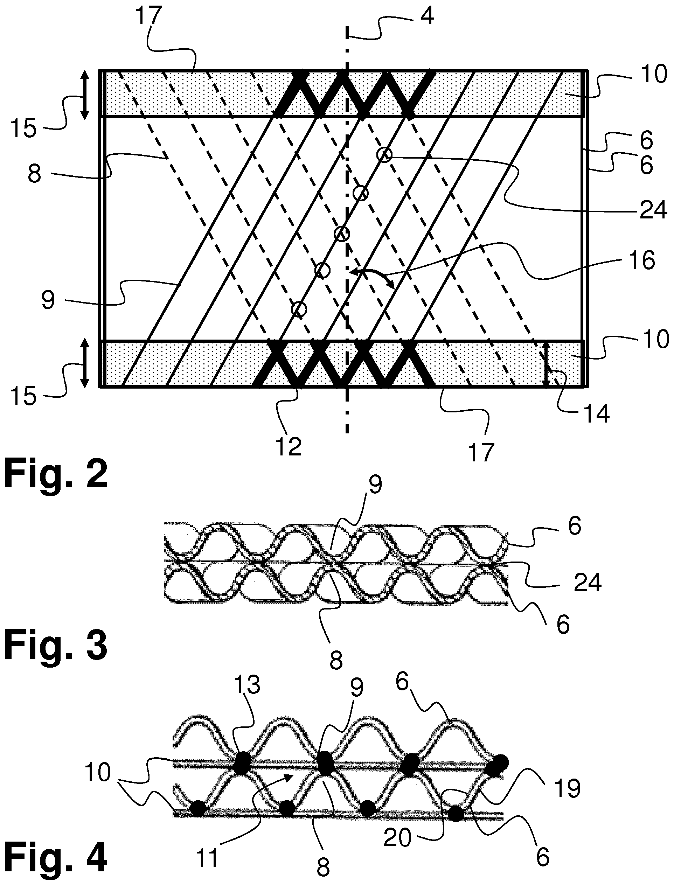

Die Fig. 2, 3 und 4 sollen den inneren Aufbau bzw. die Anlagesituationen der metallischen Lage(n) 6 mit dem Verbindungsstreifen 10 veranschaulichen. Dazu wurde hier eine abgewickelte Anordnung von diesen Bauteilen gewählt. So zeigt Fig. 2 schematisch zwei übereinander angeordnete Abschnitte einer metallischen Lage 6, wobei diese jeweils Erhebungen 8 und Vertiefungen 9 aufweisen, die parallel zueinander angeordnet sind und sich zwischen beiden Rändern 17 erstrecken. Zu erkennen ist, dass bei der oben dargestellten metallischen Lage 6 die Erhebungen 8 und Vertiefungen 9 von unten links nach oben rechts verlaufen, während bei der darunter angeordneten metallischen Lage 6 die Erhebungen 8 und Vertiefungen 9 mit entgegengesetzter Orientierung verlaufen, also von unten rechts nach oben links. Anzumerken ist hierbei, dass aus Gründen der Übersichtlichkeit bei der oberen metallischen Lage 6 nur die Vertiefungen 9 und bei der unten dargestellten metallischen Lage 6 nur die Erhebungen 8 (gestrichelt) dargestellt sind, um die Auflagesituation anschaulich darstellen zu können. Außerhalb der an den Rand 17 angrenzenden axialen Abschnitte 15 liegen somit nur in diskreten Auflagepunkten 24 Kontaktpunkte zwischen den Vertiefungen 9 der oben positionierten metallischen Lage 6 und den Erhebungen 8 der unten positionierten metallischen Lage 6 vor. Um sicherzustellen, dass hierbei ausreichend stabilisierende und sich abstützende Auflagepunkte 24 gebildet sind, ist ein Winkel 16 zwischen der Zentrumsachse 4 (bzw. einer Achse senkrecht zum Rand 17) und dem Verlauf der Erhebungen/Vertiefungen im Bereich von bis zu 20° zu wählen, wobei ein größerer Winkel insbesondere dann bevorzugt ist, wenn die Länge der Wabenstruktur (bzw. der Abstand der beiden Ränder 17 zueinander) und/oder die Zelldichte gering ist.

Fig. 3 veranschaulicht die Auflagesituation der direkt zueinander benachbart angeordneten metallischen Lagen 6 beispielhaft. Die Vertiefungen 9 der oben dargestellten metallischen Lage 6 bildet mit den Erhebungen 8 der unten dargestellten metallischen Lage 6 direkte Auflagepunkte 24, so dass sich die beiden Strukturen bzw. metallischen Lagen 6 gegeneinander (direkt) abstützen. Auch wenn hier pro Erhebung/Vertiefung sieben Auflagepunkte 24 angedeutet sind, kann diese Anzahl geringer sein (beispielsweise 2, 3, 4 oder 5). Dies ergibt sich insbesondere dann, wenn der hier zur schematischen Veranschaulichung relativ groß gewählte Winkel 16 kleiner wird.

Nahe der Ränder 17 (bzw. dann nahe der Stirnseiten des Wabenkörpers) ist ein axialer Abschnitt 15 vorgesehen, wobei jeweils ein metallischer Verbindungsstreifen 10 zwischen den metallischen Lagen 6 positioniert ist (siehe Fig. 2). Regelmäßig wird dabei der axiale Abschnitt 15 direkt durch die Breite 14 des Verbindungsstreifens 10 definiert. Der Verbindungsstreifen 10 bildet hierbei nunmehr nicht nur punktförmige Kontaktbereiche hin zu den benachbarten metallischen Lagen 6 aus, sondern bevorzugt einen im Wesentlichen über die gesamte Breite 14 verlaufenden, linienförmigen Kontakt. Entlang dieses linienförmigen Kontakts können dann bspw. Lötverbindungen 12 ausgeführt sein.

Eine ähnliche Situation ist in Fig. 4 dargestellt, wobei hier insbesondere ein Querschnitt durch den axialen Abschnitt 15 hindurch betrachtet wird. Zu erkennen ist hierbei, dass ein direkter Kontakt der benachbarten metallischen Lagen 6 über die Erhebungen 8 bzw. Vertiefungen 9 unterbunden ist, weil dazwischen ein Verbindungsstreifen 10 vorgesehen ist. Zwischen den Erhebungen 8 und/oder Vertiefungen 9 ist dann eine stoffschlüssige Verbindung hin zu dem Verbindungsstreifen 10 ausgeführt, bspw. nach Art von Schweißverbindungen 13. So sind Schweißverbindungen 13 in benachbarten Bereichen 11 der strukturierten metallischen Lage 6 vorgesehen, in denen diese einerseits zwischen Verbindungsstreifen 10 und einer ersten Oberfläche 19 der metallischen Lage 6 und andererseits mit einer zweiten Oberfläche 20 einer metallischen Lage 6 ausgebildet sind.

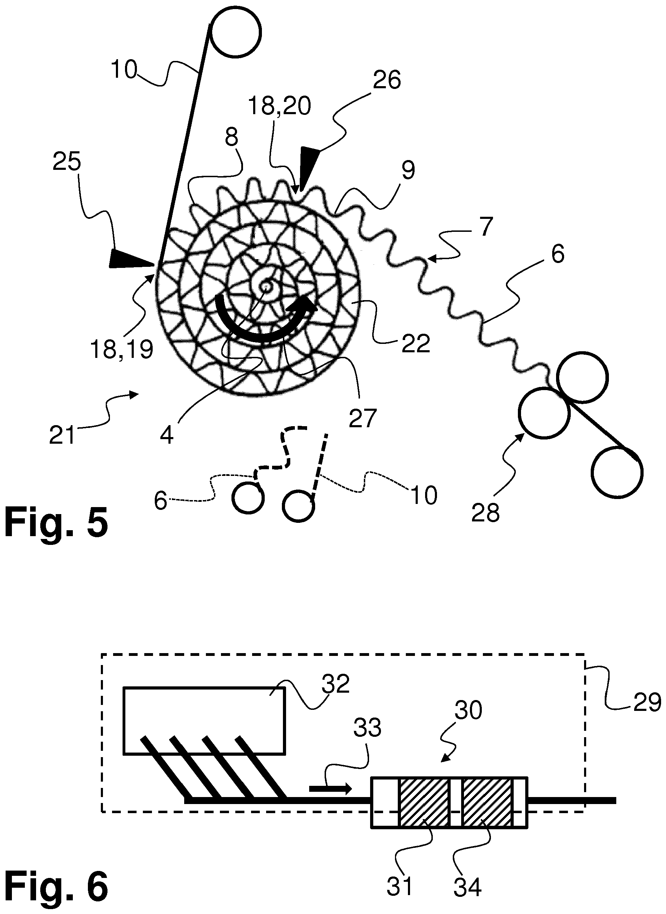

Fig. 5 zeigt schematisch den Ablauf eines Herstellungsprozesses für einen solchen Wabenkörper 1 zur Abgasnachbehandlung. Veranschaulicht ist dabei insbesondere eine kontinuierliche Fertigung der Wabenstruktur 21 mit einer einzelnen metallischen Lage 6, regelmäßig können aber auch mehrere metallische Lagen 6 in entsprechender Weise zum Aufbau der Wabenstruktur 21 eingesetzt werden (wie gestrichelt angedeutet). Hierbei ist klar, dass insbesondere wenn sich kreuzende Erhebungen/Vertiefungen beim Aufbau erreicht werden sollen, dass die Struktur 7 der metallischen Lage 6 entsprechend angepasst ist bzw. die Strukturen mehrerer metallischer Lagen entsprechend ausgeprägt sind.

Beginnend mit der Erläuterung rechts unten in Fig. 5, ist bspw. ein Coil (Wickel) veranschaulicht, von dem ein bandförmiges Blechmaterial abgezogen und einem Wellwerkzeug 28 zugeführt wird. Dort erhält die metallische Lage 6 die gewünschte Struktur 7 mit Erhebungen 8 und Vertiefungen 9. Die strukturierte metallische Lage 6 wird dann einer zweiten Schweißposition 26 zugeführt, wobei ein zweiter Teilabschnitt 18 mit einer zweiten Oberfläche 20 der strukturierten metallischen Lage 6 auf dem bereits aufgewickelten metallischen Verbindungsstreifen 10 abgelegt wird. Dort erfolgt dann eine Anbindung (Schweißverbindung) der Vertiefung 9 hin zum Verbindungsstreifen 10. Wird dann die Wabenstruktur 21 weiter aufgewickelt, indem die Wabenstruktur 21 in Rotationsrichtung 27 um die Zentrumsachse 4 herum gedreht wird, gelangen nachfolgend die Erhebungen der Struktur 7 der metallischen Lage in Kontakt mit dem metallischen Verbindungsstreifen 10, der darauf abgelegt wird. Damit kontaktiert der metallische Verbindungsstreifen 10 einen ersten Teilabschnitt 18 der ersten Oberfläche 19 der metallischen Lage 6. Nachdem dies erfolgt ist, und infolge eines weiteren Aufwickelns der Wabenstruktur 21, wird eine erste Schweißposition 25 erreicht, wobei der Verbindungsstreifen 10 mit den Erhebungen 8 der metallischen Lage 6 verschweißt wird.

Schließlich sei zur Erläuterung des technischen Umfelds noch auf das Einsatzgebiet für einen solchen Wabenkörper zur Abgasnachbehandlung auf Fig. 6 verwiesen. Dargestellt ist dort schematisch ein Kraftfahrzeug 29 mit einer Verbrennungskraftmaschine 32. Das in der Verbrennungskraftmaschine 32 erzeugte Abgas wird mit einer Strömungsrichtung 33 durch eine Abgasanlage 30 hindurchgeführt, wobei dort eine solche Abgasnachbehandlung stattfindet, dass das Abgas hinsichtlich Schadstoffe und/oder Partikel gereinigt wird. So ist hier beispielhaft ein Katalysatorträger 31 sowie ein Partikelabscheider 34 dargestellt, die jeweils Teil der Abgasanlage 30 sind und durch die das Abgas hindurchgeführt wird. Ein solcher Katalysatorträger 31 bzw. ein Partikelabscheider 34 kann mit dem hier beschriebenen Wabenkörper und/oder dem hier beschriebenen Verfahren bereitgestellt werden.

Mit Bezug auf die Erläuterungen zu den Figuren sei noch darauf hingewiesen, dass die jeweils veranschaulichten Merkmale auch mit Merkmalen aus anderen Figuren kombiniert werden können, soweit dies offensichtlich technisch nicht möglich und/oder hier explizit ausgeschlossen ist.

### Bezugszeichenliste

- 1: Wabenkörper
- 2: erste Stirnseite
- 3: zweite Stirnseite
- 4: Zentrumsachse
- 5: Länge
- 6: metallische Lage
- 7: Struktur
- 8: Erhebung
- 9: Vertiefung
- 10: Verbindungsstreifen
- 11: Bereich
- 12: Lötverbindung
- 13: Schweißverbindung
- 14: Breite
- 15: axialer Abschnitt
- 16: Winkel
- 17: Rand
- 18: Teilabschnitt
- 19: erste Oberfläche
- 20: zweite Oberfläche
- 21: Wabenstruktur
- 22: Kanalöffnungen
- 23: Gehäuse
- 24: Auflagepunkt
- 25: erste Schweißposition
- 26: zweite Schweißposition
- 27: Rotationsrichtung
- 28: Wellwerkzeug
- 29: Kraftfahrzeug
- 30: Abgasanlage
- 31: Katalysatorträger
- 32: Verbrennungskraftmaschine
- 33: Strömungsrichtung
- 34: Partikelabscheider

## Patentansprüche

1. Wabenkörper (1) zur Abgasnachbehandlung mit einer ersten Stirnseite (2), mit einer zweiten Stirnseite (3), mit einer Zentrumsachse (4), welche beide Stirnseiten durchdringt, und mit einer Länge (5), aufweisend mindestens eine zumindest teilweise strukturierte metallische Lage (6), die um die Zentrumsachse (4) herum angeordnet ist, wobei die Struktur (7) der mindestens einen metallischen Lage (6) Erhebungen (8) und Vertiefungen (9) hat, die sich zumindest über einen Teil der Länge (5) des Wabenkörpers (1) erstrecken und schräg zur Zentrumsachse (4) verlaufen, und weiter mindestens ein metallischer Verbindungsstreifen (10) zwischen benachbarten Bereichen (11) der mindestens einen zumindest teilweise strukturierte metallische Lage (6) vorgesehen ist, der kürzer als die Länge (5) des Wabenkörpers (1) ausgeführt ist und eine Lötverbindung (12) oder Schweißverbindung (13) hin zu diesen benachbarten Bereichen (11) ausbildet, **dadurch gekennzeichnet, dass** die Ausprägung der Struktur (7) derart ist, dass die Erhebungen (8) und Vertiefungen (9) in benachbarten Bereichen (11), betrachtet in radialer Richtung bezogen auf die Zentrumsachse (4), verschieden geneigt sind bzw. eine voneinander abweichende Orientierung aufweisen, so dass die Erhebungen (8) und Vertiefungen (9) wenigstens teilweise nicht linienförmig aufeinanderliegen, sondern einander kreuzen und damit im Wesentlichen nur punktförmige Auflagepunkte (24) miteinander bilden.

2. Wabenkörper (1) nach Patentanspruch 1, wobei der mindestens eine metallische Verbindungsstreifen (10) eine Breite (14) von 5 bis 20 mm hat.

3. Wabenkörper (1) nach Patentanspruch 1 oder 2, wobei der mindestens eine metallische Verbindungsstreifen (10) um die Zentrumsachse (4) herum und mindestens nahe einer Stirnseite (2, 3) des Wabenkörpers (1) angeordnet ist.

4. Wabenkörper (1) nach einem der vorhergehenden Patentansprüche, wobei der mindestens eine metallische Verbindungsstreifen (10) in einem axialen Abschnitt (15) des Wabenkörpers (1) einen Kontakt mindestens einer zumindest teilweise strukturierten metallische Lage (4) mit sich selbst oder einer weiteren zumindest teilweise strukturierte metallische Lage (6) unterbindet.

5. Wabenkörper (1) nach einem der vorhergehenden Patentansprüche, wobei ein Winkel (16) zwischen den Erhebungen (8) oder Vertiefungen (9) sowie der Zentrumsachse (4) maximal 20° beträgt.

6. Kraftfahrzeug (29), aufweisend eine Verbrennungskraftmaschine (32) mit einer Abgasanlage (30), wobei die Abgasanlage (30) wenigstens einen Katalysatorträger (31) oder einen Partikelabscheider (34) aufweist, der mit einem Wabenkörper (1) nach einem der Patentansprüche 1 bis 5 ausgeführt ist.

## Claims

1. Honeycomb body (1) for exhaust-gas aftertreatment, having a first end side (2), having a second end side (3), having a central axis (4) that extends through both end sides, and having a length (5), the honeycomb body comprising at least one at least partially structured metallic layer (6) that is arranged around the central axis (4), wherein the structure (7) of the at least one metallic layer (6) has elevations (8) and depressions (9) which extend at least over a part of the length (5) of the honeycomb body (1) and run obliquely with respect to the central axis (4), and furthermore, at least one metallic connecting strip (10) is provided between adjacent regions (11) of the at least one at least partially structured metallic layer (6), said at least one metallic connecting strip being shorter than the length (5) of the honeycomb body (1) and forming a brazed connection (12) or welded connection (13) to said adjacent regions (11), **characterized in that** the structure (7) is implemented such that the elevations (8) and depressions (9) in adjacent regions (11), as viewed in the radial direction in relation to the central axis (4), are inclined differently and/or have a different orientation than one another, such that the elevations (8) and depressions (9) at least partially do not lie linearly against one another, but rather cross one another and thus form substantially only punctiform abutment points (24) with one another.

2. Honeycomb body (1) according to Patent Claim 1, wherein the at least one metallic connecting strip (10) has a width (14) of 5 to 20 mm.

3. Honeycomb body (1) according to Patent Claim 1 or 2, wherein the at least one metallic connecting strip (10) is arranged around the central axis (4) and at least close to one end side (2, 3) of the honeycomb body (1).

4. Honeycomb body (1) according to one of the preceding patent claims, wherein the at least one metallic connecting strip (10) prevents at least one at least partially structured metallic layer (4) from coming into contact with itself, or with a further at least partially structured metallic layer (6), in an axial section (15) of the honeycomb body (1).

5. Honeycomb body (1) according to one of the preceding patent claims, wherein an angle (16) between the elevations (8) or depressions (9) and the central axis (4) is at most 20°.

6. Motor vehicle (29), comprising an internal combustion engine (32) with an exhaust system (30), wherein the exhaust system (30) has at least one catalyst substrate (31) or particle separator (34) that is formed with a honeycomb body (1) according to one of Patent Claims 1 to 5.

## Revendications

1. Corps en nid d'abeilles (1) pour le post-traitement de gaz d'échappement, comprenant un premier côté frontal (2), un deuxième côté frontal (3), un axe central (4) qui traverse les deux côtés frontaux, et une longueur (5), présentant au moins une couche métallique au moins partiellement structurée (6) qui est disposée autour de l'axe central (4), la structure (7) de l'au moins une couche métallique (6) présentant des rehaussements (8) et des renfoncements (9) qui s'étendent au moins sur une partie de la longueur (5) du corps en nid d'abeilles (1) et qui s'étendent obliquement par rapport à l'axe central (4), et en outre au moins une bande de liaison métallique (10) étant prévue entre des régions adjacentes (11) de l'au moins une couche métallique au moins partiellement structurée (6), laquelle est plus courte que la longueur (5) du corps en nid d'abeilles (1) et constitue une liaison par brasage (12) ou une liaison par soudage (13) à ces régions adjacentes (11), **caractérisé en ce que** le gaufrage de la structure (7) est tel que les rehaussements (8) et les renfoncements (9) sont inclinés de manière différente dans des régions adjacentes (11), vu dans la direction radiale par rapport à l'axe central (4) ou présentent une orientation s'écartant les uns des autres de telle sorte que les rehaussements (8) et les renfoncements (9) ne soient au moins en partie pas superposés linéairement mais se croisent mutuellement et forment les uns avec les autres seulement essentiellement des points d'appui ponctuels (24) .

2. Corps en nid d'abeilles (1) selon la revendication 1, dans lequel l'au moins une bande de liaison métallique (10) présente une largeur (14) de 5 à 20 mm.

3. Corps en nid d'abeilles (1) selon la revendication 1 ou 2, dans lequel l'au moins une bande de liaison métallique (10) est disposée autour de l'axe central (4) et au moins à proximité d'un côté frontal (2, 3) du corps en nid d'abeilles (1).

4. Corps en nid d'abeilles (1) selon l'une quelconque des revendications précédentes, dans lequel l'au moins une bande de liaison métallique (10), dans une portion axiale (15) du corps en nid d'abeilles (1), empêche un contact d'au moins une couche métallique au moins partiellement structurée (4) avec elle-même ou avec une autre couche métallique au moins partiellement structurée (6).

5. Corps en nid d'abeilles (1) selon l'une quelconque des revendications précédentes, dans lequel un angle (16) entre les rehaussements (8) ou les renfoncements (9) et l'axe central (4) vaut au maximum 20°.

6. Véhicule automobile (29), présentant un moteur à combustion interne (32) avec une installation de gaz d'échappement (30), l'installation de gaz d'échappement (30) présentant au moins un support de catalyseur (31) ou un séparateur de particules (34) qui est réalisé avec un corps en nid d'abeilles (1) selon l'une quelconque des revendications 1 à 5.
